# EUROPÄISCHE PATENTANMELDUNG

(11) **EP 4 530 608 A1**
(43) Veröffentlichungstag der Anmeldung: **02.04.2025**
(21) Anmeldenummer: 24194002.2
(22) Anmeldetag: 12.08.2024
(51) Int. Cl.: G01N 21/3563, A01D 41/127, G01N 21/359, G01N 21/85, G01N 21/84

(54) **SENSORZUSAMMENBAU, LANDWIRTSCHAFTLICHE MASCHINE UND ZUGEHÖRIGES VERFAHREN**

(30) Priorität: 26.09.2023 DE 102023126147
(71) Anmelder: Deere & Company, Moline, IL 61265 (US)
(72) Erfinder: HAIGES, WOLFRAM, 68163 Mannheim (DE); WELSCH, STEFAN, 68163 Mannheim (DE); PELTZ, CHRISTOPH, 68163 Mannheim (DE); CHRISTMANN, JOHANNES, 68163 Mannheim (DE); HOCHREITER, GEORG, 68163 Mannheim (DE)
(74) Vertreter: Holst, Sönke

(57) **Zusammenfassung**

Ein Sensorzusammenbau (64) umfasst einen Sensor (66), der zur Erfassung wenigstens einer Eigenschaft einer Probe eingerichtet ist, und eine Messkammer (72) mit einem Einlass (114), durch den die Probe in die Messkammer (72) einführbar ist, wobei der Sensor (66) eingerichtet ist, mit der in der Messkammer (72) enthaltenen Probe zusammenzuwirken und deren Eigenschaft zu ermitteln. Der Einlass (114) ist mit einer Leitung (60) verbindbar, durch welche in einer landwirtschaftlichen Maschine (10) gefördertes Material als Probe durch den Einlass (114) hindurch in die Messkammer (72) führbar ist, und die Leitung (60) ist vom Einlass (114) der Messkammer (72) trennbar und anstelle der Leitung (60) ist eine Befülleinrichtung (110) zum Einfüllen einer Probe mit dem Einlass (114) koppelbar.

## Beschreibung

Die vorliegende Erfindung bezieht sich auf einen Sensorzusammenbau nach dem Oberbegriff des Anspruchs 1, eine damit ausgestattete landwirtschaftliche Maschine sowie ein entsprechendes Verfahren.

### Stand der Technik

In der Vergangenheit wurden unterschiedliche Sensoren zur Erfassung von Ernteguteigenschaften (wie kapazitive Feuchtigkeitssensoren, Kameras und Nahinfrarotspektrometer) vorgeschlagen, um dem Bediener eines Mähdreschers eine Indikation über die derzeit vorliegenden Eigenschaften des Ernteguts in der Erntemaschine zu geben, basierend auf denen er (oder eine selbsttätige Steuerung) Parameter des Bearbeitungsprozesses verändern kann, oder um die erfassten Eigenschaften insbesondere ortsspezifisch zu dokumentieren.

Aber auch andere Erntemaschinen, wie Ballenpressen oder Feldhäcksler, werden mit Sensoren zur Erfassung von Ernteguteigenschaften ausgestattet, sei es, um diese Eigenschaften zu Zwecken der Präzisionslandwirtschaft ortsspezifisch zu kartieren oder um Bearbeitungsparameter des Ernteguts basierend auf den gemessenen Ernteguteigenschaften selbsttätig oder auf einer Anzeige der Eigenschaften des Ernteguts basierend durch den Bediener einzustellen. Derartige Sensoren werden auch an anderen landwirtschaftlichen Maschinen verwendet, z.B. an Sämaschinen zur Erfassung von Eigenschaften des auszubringenden Saatguts oder an Güllefässern zur Erfassung der Inhaltsstoffgehalte der auszubringenden Gülle.

Die Sensoren sind im Stand der Technik einem Kanal benachbart angeordnet, in dem das Material während des Betriebs entlang strömt (wie in EP 1 523 874 A1 oder US 2022/0132736 A1), oder sie sind an einer Abzweigleitung angebracht, welcher ein Anteil des Materials zugeführt wird, und erfassen fließendes oder stehendes Material (vgl. beispielsweise WO 2006/010761 A1, US 6 285 198 B1, US 2002/0133309 A1, EP 0 908 086 A1, DE 10 2010 062 417 A1).

Da insbesondere Nahinfrarotspektrometer recht preisaufwändig sind, sind die Sensoren oftmals abnehmbar an der landwirtschaftlichen Maschine angebracht und können auch verwendet werden, um andere Materialien zu untersuchen, indem sie beispielsweise an einer anderen Halterung angebracht werden, d.h. als stationärer Sensor eingesetzt werden (EP 1 523 874 A1) oder wahlweise an einem Förderband positioniert werden, auf dem das Erntegut an ihnen vorbei gefördert wird, oder von Hand in einen Tank mit Erntegut getaucht werden (US 2002/0039186 A1).

Falls der Sensor von der landwirtschaftlichen Maschine abgenommen und an anderer Stelle eingesetzt wird, stellt sich das Problem, dass man eine Einrichtung benötigt, um die dort zu untersuchende Probe dem Sensor zu präsentieren. Hierzu ist eine separate, kostenintensive Probenpräsentationseinrichtung (s. WO 01/69213 A2 und EP 1 523 874 A1) vonnöten, zumindest wenn man das zu untersuchende Material am Sensor vorbeifließen lassen möchte, um eine hinreichend hohe Anzahl an Messwerten der Probe zu erhalten und die Fehlerwahrscheinlichkeit zu vermindern bzw. die Statistik zu verbessern. Zudem ist es im Stand der Technik nicht möglich, mit dem an der landwirtschaftlichen Maschine angebrachten Sensor eine andere Probe als das dem Sensor jeweils zugeführte, in der Maschine geförderte Material zu untersuchen.

### Aufgabe

Es ist eine Aufgabe der vorliegenden Erfindung, die besagten Nachteile zu vermeiden oder zumindest zu vermindern.

### Lösung

Diese Aufgabe wird durch die Lehren der Ansprüche 1, 10 und 11 gelöst, wobei die untergeordneten Ansprüche vorteilhafte Ausführungsformen beschreiben.

Ein Sensorzusammenbau umfasst einen Sensor, der zur Erfassung wenigstens einer Eigenschaft einer Probe eingerichtet ist, und eine Messkammer mit einem Einlass, durch den die Probe in die Messkammer einführbar ist, wobei der Sensor eingerichtet ist, mit der in der Messkammer enthaltenen Probe zusammenzuwirken und deren Eigenschaft zu ermitteln, und wobei der Einlass mit einer Leitung verbindbar ist, durch welche in einer landwirtschaftlichen Maschine gefördertes Material als Probe durch den Einlass hindurch in die Messkammer führbar ist. Die Leitung ist vom Einlass der Messkammer trennbar und anstelle der Leitung ist eine Befülleinrichtung zum Einfüllen einer (anderen) Probe mit dem Einlass koppelbar.

Mit anderen Worten wird vorgeschlagen, den Sensorzusammenbau an der landwirtschaftlichen Maschine dauerhaft oder abnehmbar anzubringen, um in an sich bekannter Weise in einer ersten (normalen) Messbetriebsart in der Maschine gefördertes Material durch eine Leitung und einen Einlass in eine Messkammer des Sensorzusammenbaus einzuführen, in welcher das Material durch den Sensor untersucht wird, den Sensorzusammenbau jedoch im an der Maschine angebrachten Zustand in der Weise umkonfigurierbar zu machen, dass die Leitung vom Einlass getrennt wird und anstelle der Leitung eine Befülleinrichtung mit dem Einlass gekoppelt wird, um in einer zweiten (anderen) Messbetriebsart eine andere Probe als das jeweils in der landwirtschaftlichen Maschine geförderte Material in die Messkammer zu führen und dort mit dem Sensor zu untersuchen. Bei Umkonfigurieren kann im einfachsten Fall von Hand die Leitung von einer Befestigung am Einlass abgenommen und durch die Befülleinrichtung ersetzt werden, obwohl auch denkbar wäre, am Einlass oder in die Leitung ein von Hand oder mittels eines Aktors verstellbares Ventil einzubauen, durch welches der Einlass wahlweise mit der Leitung, die mit dem Material aus der Maschine beaufschlagt wird, oder mit der Befülleinrichtung verbunden wird, die dauerhaft oder lösbar an dem Ventil angebracht sein kann.

Die Befülleinrichtung kann manuell durch einen Bediener befüllbar sein und beispielsweise einen Trichter umfassen. Der Bediener kann demnach ein zu untersuchendes Material durch die Befülleinrichtung dem Sensorzusammenbau zuführen. Im Falle einer Erntemaschine kann er beispielsweise mittels eines Gefäßes (Eimer o.ä.) eine Probe aus einem Behälter für Erntegut, z.B. dem Korntank eines Mähdreschers oder einem Ladebehälter, der von einem Feldhäcksler aufgenommenes und gehäckseltes Erntegut enthält, oder einem beliebigen anderen Behälter oder Vorrat entnehmen und das Gefäß in die Befülleinrichtung entleeren, um das Erntegut mittels des Sensorzusammenbaus zu untersuchen.

Die Messkammer kann einen ersten Auslass, durch welchen das durch die Leitung zugeführte Material wieder der landwirtschaftlichen Maschine zuführbar ist, und einen zweiten Auslass umfassen, durch den eine mittels der Befülleinrichtung der Messkammer zugeführte (andere) Probe aus der Messkammer herausführbar ist. Demnach wird die (andere) Probe nicht durch den ersten Auslass wieder der Maschine zurückgeführt, sondern in den zweiten Auslass geleitet. Dieser zweite Auslass kann mit einem Behälter zur Aufnahme der aus der Messkammer abgelassenen Probe verbindbar sein. Insbesondere ist der zweite Auslass am Boden der Messkammer stromauf des ersten Auslasses angeordnet und verschließbar, sei es durch einen Stopfen oder Deckel oder einen beweglichen Verschluss.

Der Messkammer ist vorzugsweise ein Förderer zugeordnet, der konfiguriert ist, die Probe an der sensitiven Fläche des Sensors entlang zu fördern. Dadurch besteht die Möglichkeit, mit dem Sensor nicht nur einen einzigen Messwert der Probe zu erstellen, sondern eine größere Anzahl an Messwerten an unterschiedlichen Stellen der am Sensor nach und nach (sei es, dass die Probe schrittweise am Sensor vorbeigeführt wird, um den jeweils vom Sensor erfassten Bereich der Probe mit einer längeren Messzeit erfassen zu können, oder dass die Probe kontinuierlich am Sensor vorbeigeführt wird und der Sensor mit einer vorgegebenen Frequenz, z.B. 1 Hz, Messungen vornimmt) vorbeigeführten Probe zu erfassen, um die Messfehler zu vermindern. Hierbei können Mittelwerte aus mehreren Messungen erfasst werden, insbesondere beim Messen der anderen, durch die Befülleinrichtung eingefüllten Probe, oder die einzelnen Messwerte werden separat erfasst, insbesondere im normalen Erntebetrieb.

Der Förderer ist insbesondere bezüglich der Flussrichtung der Probe stromab der sensitiven Fläche des Sensors angeordnet.

Der Sensor kann ein Nahinfrarotspektrometer sein, obwohl auch beliebige andere Sensoren, wie Kameras, kapazitive Feuchtigkeitsmesser und dergleichen als Sensor verwendet werden können. Der Sensorzusammenbau kann einen einzigen derartigen Sensor umfassen oder eine Kombination aus zwei oder mehr unterschiedlichen, in diesem Absatz erwähnten Sensoren.

Eine landwirtschaftliche Maschine, insbesondere Erntemaschine, kann mit einem beschriebenen Sensorzusammenbau ausgestattet werden. Die Maschine umfasst Mittel zum Fördern von landwirtschaftlichem Material, wobei der Sensorzusammenbau konfiguriert ist, durch die Leitung in der Maschine gefördertes Material zu erhalten und dem Sensor als Probe zu präsentieren, damit er die Eigenschaft des Materials erfassen kann. Durch die Leitung wird demnach in der normalen, ersten Messbetriebsart ein (aus dem Förderkanal abgezweigter) Teil des sich in der landwirtschaftlichen Maschine in einem Förderkanal bewegenden Materials oder das gesamte im Förderkanal (der dann der Leitung entspricht) strömende Material in den Sensorzusammenbau gefördert.

Ein Verfahren zur Messung von Eigenschaften von Erntegut oder einer anderen Probe mittels eines Sensorzusammenbaus, der einen zur Erfassung wenigstens einer Eigenschaft einer Probe eingerichteten Sensor und eine Messkammer mit einem Einlass für die Probe umfasst, sieht vor, dass in einer ersten Messbetriebsart der Einlass mit einer Leitung verbunden wird, durch welche in einer landwirtschaftlichen Maschine gefördertes Material als Probe durch den Einlass hindurch und in die Messkammer geführt wird und der Sensor mit der in der Messkammer enthaltenen Probe zusammenwirkt und deren Eigenschaft ermittelt, während in einer zweiten Messbetriebsart die Leitung vom Einlass der Messkammer getrennt und anstelle der Leitung eine Befülleinrichtung zum Einfüllen einer (anderen als der aus der Maschine kommenden) Probe mit dem Einlass gekoppelt wird.

### Ausführungsbeispiel

Diese und andere Aufgaben, Merkmale und Vorteile der vorliegenden Erfindung werden dem Fachmann nach dem Lesen der folgenden detaillierten Beschreibung und angesichts der Zeichnungen offensichtlich.
Fig. 1 ist eine schematische Seitenansicht einer landwirtschaftlichen Maschine in Form eines Mähdreschers.
Fig. 2 ist ein vergrößerter Ausschnitt der Figur 1 und zeigt den Kornelevator des Mähdreschers mit dem Sensorzusammenbau.
Fig. 3 zeigt einen Schnitt durch den Sensorzusammenbau in einer ersten Konfiguration zur Untersuchung von einer Probe, die ihm in Form von Erntegut durch die Maschine zugeführt wird.
Fig. 4 zeigt einen Schnitt durch den Sensorzusammenbau in einer zweiten Konfiguration zur Untersuchung einer anderen Probe, die ihm durch einen Bediener der Maschine zugeführt wird.

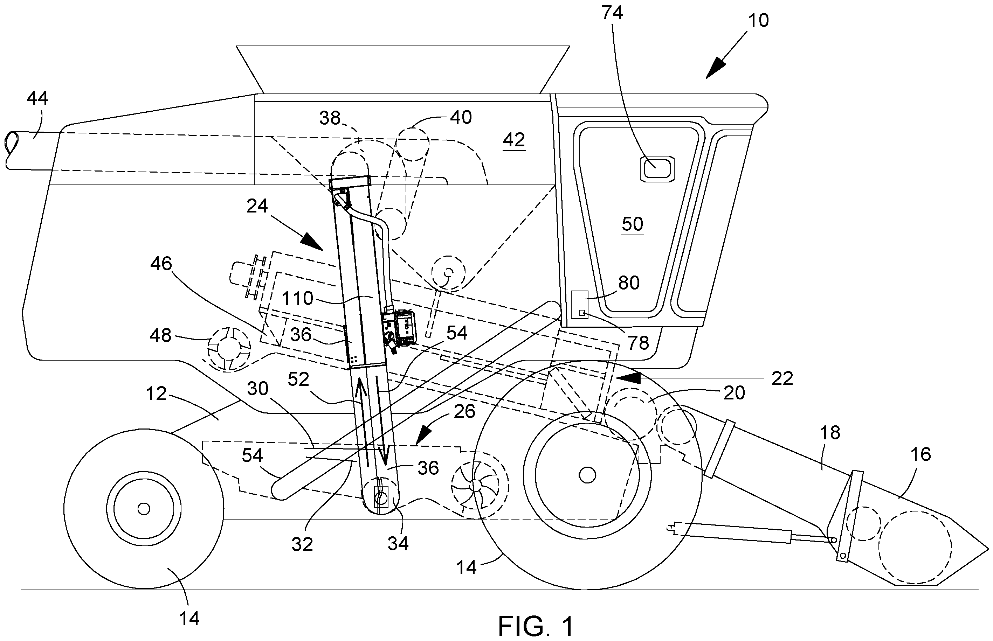

Es wird nun auf die Figur 1 verwiesen, in der als Beispiel für eine landwirtschaftliche Maschine eine Erntemaschine in der Form eines Mähdreschers 10 gezeigt wird, welcher einen Hauptrahmen 12 mit angetriebenen vorderen und lenkbaren rückwärtigen, im Bodeneingriff befindlichen Rädern 14 umfasst, welche den Hauptrahmen 12 zur Vorwärtsbewegung über ein abzuerntendes Feld abstützen. Obwohl Räder 14 gezeigt werden, kann der Mähdrescher 10 komplett oder teilweise auf im Bodeneingriff befindlichen Raupenlaufwerken abgestützt werden. Der Antrieb der vorderen Räder 14 erfolgt durch ein konventionelles hydrostatisches Getriebe von einem am Hauptrahmen 12 befestigten Verbrennungsmotor. Im Folgenden beziehen sich Richtungsangaben (wie vorwärts) auf die Vorwärtsrichtung des Mähdreschers 10, die in der Figur 1 nach rechts verläuft.

Ein höhenverstellbarer Erntevorsatz in der Form eines Schneidwerks 16 wird verwendet, um Erntegut abzuernten und es einem Schrägförderer 18 zuzuführen. Der Schrägförderer 18 ist schwenkbar am Hauptrahmen 12 angelenkt und umfasst einen Förderer, um das eingefahrene Erntegut einer Leittrommel 20 zuzuführen. Die Leittrommel 20 fördert das Erntegut durch einen Einlassübergangsabschnitt 22 nach oben zu einem rotierenden Dresch- und Trennzusammenbau 24. Es können auch andere Orientierungen und Typen von Dreschstrukturen und andere Typen von Erntevorsätzen 16 verwendet werden, wie ein sich quer erstreckender Rahmen, der einzelne Reiheneinheiten abstützt.

Beim Erntebetrieb drischt und trennt der rotierende Dresch- und Trennzusammenbau 24 das Erntegut. Korn und Kaff fallen durch Roste am Boden des rotierenden Dresch- und Trennzusammenbaus 24 in ein Reinigungssystem 26. Das Reinigungssystem 26 umfasst ein Gebläse 28, obere Siebe 30 und untere Siebe 32, die das Kaff abtrennen. Das saubere Korn wird über die Breite des Reinigungssystems 26 durch eine Querförderschnecke 34 zusammengeführt, die es einem Elevator 36 für sauberes Korn zuführt. Der Elevator 36 umfasst Ketten und Paddel und fördert das saubere Korn in einen Übergangsabschnitt 38, von dem ausgehend es durch eine Korntankbefüllschnecke 40 in einen Korntank 42 gefördert wird. Der Elevator 36 hat ein nach oben förderndes Trum (Pfeil 52) und ein nach unten laufendes (Leer-) Trum (Pfeil 54). Das saubere Korn im Korntank 42 kann durch einen Entladeschneckenförderer 44 auf einen Kornwagen oder Lastwagen überladen werden. Überkehr wird vom rückwärtigen Ende des unteren Siebs 32 durch einen Überkehrelevator 54 an den rotierende Dresch- und Trennzusammenbau 24 zurückgegeben.

Ausgedroschenes, getrenntes Stroh wird vom rotierenden Dresch- und Trennzusammenbau 24 durch einen Auslass 46 einem Abgabeförderer 48 übergeben. Der Abgabeförderer 48 stößt das Stroh wiederum an der Rückseite des Mähdreschers 10 aus. Es ist anzumerken, dass der Abgabeförderer 48 das von Korn verschiedene Material direkt einem Strohhäcksler zuführen könnte. Der Betrieb des Mähdreschers 10 wird von in einer Bedienerkabine 50 aus gesteuert.

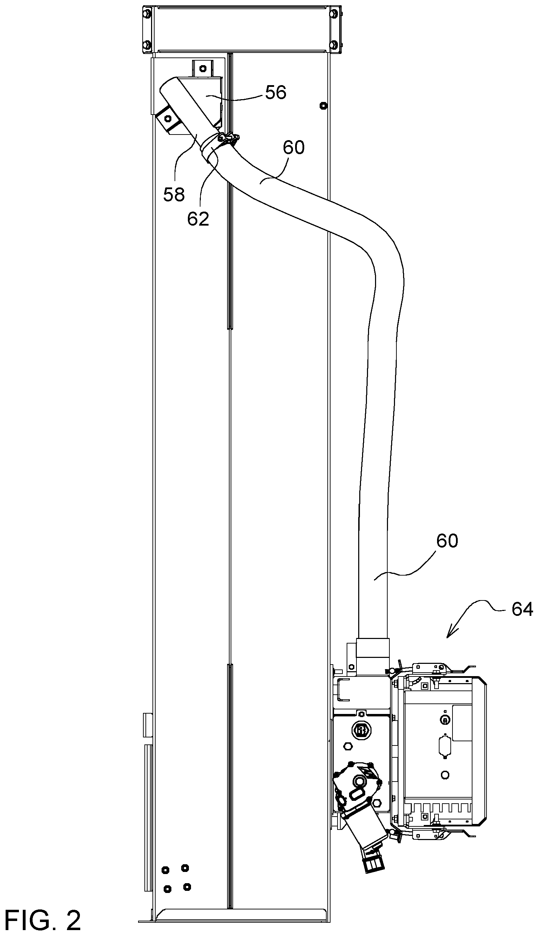

Wie in der Figur 2 größer gezeigt wird, ist in der Nähe des oberen Endes des nach oben fördernden Trums des Elevators 36 eine Öffnung in der Seitenwand des Gehäuses des Elevators 36 vorhanden, durch welche im Elevator 36 gefördertes Korn austreten kann. An der Öffnung ist ein Einlaufelement 56 angeordnet, das das aus dem Elevator 36 austretende Korn aufnimmt und einen Rohrstutzen 58 umfasst, an dem eine flexible Leitung 60 mittels einer Schelle 62 befestigt ist. Die Leitung 60 erstreckt sich nach unten bis zu einem Sensorzusammenbau 64. Im Erntebetrieb tritt fortlaufend Korn aus dem Elevator 36 durch die Öffnung aus und wird durch das Einlaufelement 56, den Rohrstutzen 58 und die Leitung zum Sensorzusammenbau 64 geleitet.

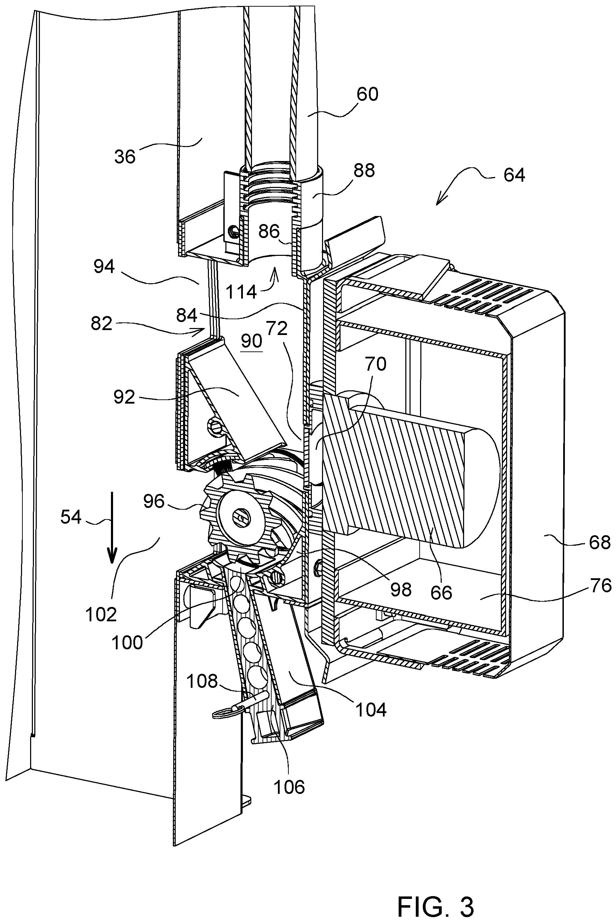

Es wird jetzt auf die Figur 3 verwiesen, in welcher der Sensorzusammenbau 64 in einer normalen, ersten Messbetriebsart dargestellt ist. Der Sensorzusammenbau 64 umfasst einen Sensor 66, der innerhalb eines Gehäuses 68 angebracht ist. Der Sensor 66 ist insbesondere ein Nahinfrarotspektrometer, das durch ein Fenster 70 im Gehäuse in eine Messkammer 72 hineinblickt. Der als Nahinfrarotspektrometer ausgeführte Sensor 66 umfasst in an sich bekannter Weise eine Lichtquelle, mit der die Messkammer 72 mit Licht im Infrarotbereich beaufschlagt wird, sowie lichtempfindliche Elemente, die von einer in der Messkammer 72 enthaltenen Probe reflektiertes Licht nach Wellenlängen aufgespaltet empfangen. Anhand der wellenlängenabhängig erfassten Intensitäten des Lichts und abgespeicherter Kalibrierdaten können durch eine Rechnereinrichtung 76 die Anteile der Probe an bestimmten Inhaltsstoffen ermittelt werden. Die Rechnereinrichtung 76 kann im Gehäuse 68 enthalten oder davon getrennt sein. Analog könnte zwischen der Probe und den lichtempfindlichen Elementen eine Glasfaser angebracht werden. Ein geeigneter Sensor 66 an sich ist beispielsweise in der EP 4 184 148 A1 gezeigt und beschrieben.

Die Rechnereinrichtung 76 ist mit einer Steuerung 80 mit einem Prozessor 78 verbunden, der wiederum mit einer Anzeigeeinrichtung 74 in Verbindung steht und übermittelt die jeweils erfassten Inhaltsstoffgehalte der Probe. Die mittels des Sensors 66 erfassten Inhaltsstoffe des Korns können auf der Anzeigeeinrichtung 74 angezeigt, durch den Prozessor 78 georeferenziert abgespeichert und/oder zur durch die Steuerung 80 zur selbsttätigen Ansteuerung von Betriebsparametern des Mähdreschers 10 verwendet werden. So kann beispielsweise die Einstellung eines Dreschspalts abhängig von der mit dem Sensor 66 erfassten Feuchte des Korns erfolgen, um bei trockenem Korn unnötigen Bruch zu vermeiden.

Die Messkammer 72 befindet sich innerhalb eines Halterungszusammenbaus 82, der seinerseits an der Seitenwand des Elevators 36 befestigt ist. Der Halterungszusammenbau 82 umfasst ein hohles Gehäuse 84, das mit einem oberen Stutzen 86 ausgestattet ist, an dem die Leitung 60 mittels einer Überwurfmutter 88 abnehmbar befestigt ist. Unterhalb des Stutzens 86 bildet das Gehäuse 84 des Halterungszusammenbaus 82 eine Kammer 90. Die dem Sensor 66 gegenüber liegende Wand 92 der Kammer 90 ist nach unten und zum Sensor 66 hin geneigt, sodass die Kammer 90 sich nach unten hin trichterförmig verengt und am unteren Ende der Wand 92 die Messkammer 72 bildet. Der Sensor66 erfasst im Betrieb die Eigenschaften bzw. Inhaltsstoffe einer in der Messkammer 72 enthaltenen Probe. Das untere Ende des Stutzens 86 kann im Sinne der Ansprüche als Einlass 114 des Halterungszusammenbaus 82 und somit auch der Messkammer 72 angesehen werden.

Oberhalb der Kammer 90 ist der Halterungszusammenbau 82 mit einer Öffnung 94 versehen, die sich mit einer Öffnung in der Seitenwand des Elevators 36 überdeckt. Solange demnach durch die Leitung 60 in die Kammer 90 und die sich darunter anschließende Messkammer 72 einlaufendes Korn nicht durch die Messkammer 72 nach unten abfließt (d.h. wenn ein unterhalb der Messkammer 72 angeordneter Förderer 96 steht, jedoch Korn durch die Leitung 60 einläuft), gelangt es, wenn die Kammer 90 bis zum unteren Rand der Öffnung 94 gefüllt ist, durch die Öffnung 94 in das nach unten laufende Trum des Elevators 36 und wird wieder dem nach oben laufenden Trum des Elevators und somit dem Korntank 42 zugeführt.

Unterhalb der Messkammer 72 ist der besagte Förderer 96 angeordnet, der in der gezeigten Ausführungsform mit um seinen Umfang verteilten Mitnehmern ausgestattet ist, die hier wendelförmig ausgeführt sind, und durch einen nicht gezeigten Antrieb um eine horizontal und parallel zur Seitenwand des Elevators 36 verlaufende Achse antreibbar ist. Der unterschlächtig arbeitende Förderer 96 ist stromab der Messkammer 72 angeordnet und fördert, wenn er durch den Antrieb gedreht wird, das Korn aus der Messkammer 72 ab, sodass neues Korn von oben her nachrutscht und der Förderer 96 im Ergebnis das Korn bzw. die Probe durch die Messkammer 72 und entlang des Sensors 66 fördert, damit nach und nach immer wieder anderes Korn durch den Sensor 66 untersucht wird.

Der Boden 98 des Halterungszusammenbaus 82 bildet unterhalb des Förderers 96 einen an den Hüllkreis des Förderers 96 angepassten Trog. Der Förderer 96 fördert, wenn er angetrieben wird, das Korn aus der Messkammer 72 entlang des Bodens 98 und durch einen ersten Auslass 102 wieder dem nach unten laufenden Trum des Elevators 36 zu. Der erste Auslass 102 wird durch entsprechende Öffnungen im Halterungszusammenbau 82 und in der Seitenwand des Elevators 36 gebildet. Der Boden 98 umfasst zudem stromauf des ersten Auslasses 102 unterhalb des Förderers 96 einen zweiten Auslass 100, der nach unten hin in einen Stutzen 104 übergeht. In der Figur 3 sind der zweite Auslass 100 und der Stutzen 104 durch einen (plan mit dem benachbarten Boden 98 abschließenden) Stopfen 106 verschlossen, der in den Stutzen 104 eingeschoben und dort durch einen Stift 108 verriegelt ist. Die Querschnitte des Stutzens 104 und des genau darin hinein passenden Stopfens 106 sind hier rechteckig.

Der bisher beschriebene Aufbau des Sensorzusammenbaus 64 ermöglicht es nach alledem, in einer ersten Messbetriebsart Korn aus dem nach oben laufenden Trum des Elevators 36 über die Leitung 60 in die Messkammer 72 zu leiten, dort (als Probe) mit dem Sensor 66 zu untersuchen, mit dem Förderer 96 aus der Messkammer 72 abzufördern und das Korn durch die erste Öffnung wieder in das nach unten laufende Trum des Elevators 36 zu leiten. Hierbei fließt die Probe kontinuierlich am Sensor 66 vorbei und die Messungen erfolgen mit einer vorgegebenen Frequenz. Die Messwerte können in an sich bekannter Weise georeferenziert kartiert werden, insbesondere unter Kompensation der Laufzeit des Ernteguts vom jeweiligen, ursprünglichen Standort des Ernteguts auf dem Feld bis zum Erreichen des Sensors.

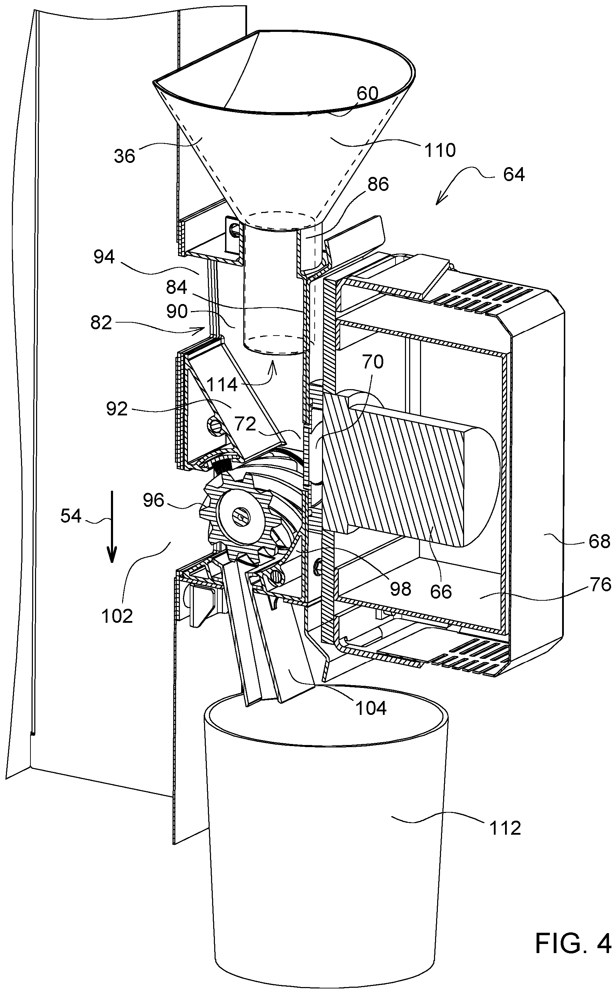

Ein derartiger Sensorzusammenbau 64 ist (abgesehen vom zweiten Auslass 100, dem Stutzen 104 und dem Stopfen 106) in den US-Patentanmeldungen 18/312841 und 18/312905 vom 5.5.2023 offenbart, deren Inhalte durch Verweis mit in die vorliegenden Unterlagen aufgenommen werden. Weitere, ähnliche Sensorzusammenbauten sind auch in den Figuren 2 und 4 der US 2002/0133309 A1 gezeigt, deren gesamte Offenbarung ebenfalls durch Verweis mit in die vorliegenden Unterlagen aufgenommen wird.

Wie in der Figur 4 gezeigt, ist mit dem gezeigten Sensorzusammenbau auch eine zweite Messbetriebsart möglich. In der zweiten Messbetriebsart ist die Leitung 60 (durch einen Bediener des Mähdreschers 10 von Hand, insbesondere in werkzeugloser Weise durch Abschrauben der Überwurfmutter 88 und Abziehen der flexiblen Leitung 66 vom Stutzen 86) vom oberen Stutzen 86 abgenommen und anstelle ihrer ist eine Befülleinrichtung 110 in Form eines Trichters auf den oberen Stutzen 86 aufgesetzt. Der zylindrische Auslauf der Befülleinrichtung 110 erstreckt sich bis in die Kammer 90. Zudem ist der Stopfen 106 aus dem Stutzen 104 heraus genommen und unterhalb des Stutzens 104 ist ein Behälter 112 gestellt oder anderweitig fixiert (angehängt oder dgl.). In der zweiten Messbetriebsart kann ein Bediener demnach, wenn der Mähdrescher 10 steht, der Sensor 66 und der Antrieb des Förderers 96 jedoch elektrisch versorgt werden, Korn (beliebigen Ursprungs, z.B. aus dem Korntank 42 oder einem anderen Behälter, in dem beispielsweise Getreide gelagert wird) in die Befülleinrichtung 110 einfüllen. Der Förderer 96 fördert das Korn dann aus der Kammer 90 in die Messkammer 72 und es wird (als Probe) durch den Sensor 66 untersucht und gelangt schließlich durch den zweiten Auslass 100 und den Stutzen 104 in den Behälter 112. Beim Sensieren der anderen, durch die Befülleinrichtung 110 zugeführten Probe gemäß Figur 4 werden beim Durchlauf der Probe durch die Messkammer 72 mehrere Messungen durchgeführt, analog zum normalen Betrieb, mit einer bestimmten Messfrequenz. Die einer einzelnen, in die Befülleinrichtung 110 eingefüllten Gesamt-Probe zugehörigen Messwerte werden üblicherweise gemittelt und dem Bediener z.B. am Sensorzusammenbau oder der Anzeigeeinrichtung 74 angezeigt und/oder abgespeichert. Hierbei können der Sensor 66 und der Förderer 96 kontinuierlich im Betrieb sein oder auf eine Eingabe des Bedieners in eine geeignete Schnittstelle (insbesondere am Sensorzusammenbau, z.B. in Form eines (Tast-) Schalters, ggf. mit Anzeige der Betriebsart) oder Fernbedienung hin aktiviert werden.

Im Ergebnis ist die Sensoranordnung 64 somit eingerichtet, auch in einer zweiten Messbetriebsart eine (andere) Probe zu untersuchen, die nicht durch die Leitung 60, sondern aus der Befülleinrichtung 110 in die Messkammer 72 gelangt, in der es durch den Sensor 66 untersucht wird. Diese (andere) Probe wird nicht in das rücklaufende Trum des Elevators 36 zurückgeführt, sondern in den Behälter 112 geleitet. Es wäre jedoch auch denkbar, den Stopfen 106 in der zweiten Messbetriebsart im Stutzen 104 zu belassen, um die (andere) Probe nach ihrer Untersuchung durch den Sensor 66 wieder in den Elevator 36 zu leiten. Eine andere Möglichkeit besteht auch darin, (bei stehendem Mähdrescher 10 und Förderer 96) den zweiten Auslass 100 zu öffnen und einen Behälter 112 darunter zu positionieren, während die Leitung 66 mit dem Stutzen 86 verbunden ist, und dann den Förderer 96 für eine begrenzte Zeit zu aktivieren, um das durch den Sensor 66 sensierte Korn als Referenzprobe aus dem Mähdrescher 10 zu entnehmen und zu Kalibrierzwecken in einem Labor zu untersuchen. Hierzu könnte auch eine selbsttätigte Probennahme vorgesehen sein, vgl. DE 10 2010 062 417 A1, und die zweite Öffnung 100 durch einen aktorisch betätigten Verschluss geöffnet und geschlossen werden.

## Patentansprüche

1. Sensorzusammenbau (64), umfassend:
einen Sensor (66), eingerichtet zur Erfassung wenigstens einer Eigenschaft einer Probe, und
eine Messkammer (72) mit einem Einlass (114), durch den die Probe in die Messkammer (72) einführbar ist, wobei der Sensor (66) eingerichtet ist, mit der in der Messkammer (72) enthaltenen Probe zusammenzuwirken und deren Eigenschaft zu ermitteln,
und wobei der Einlass (114) mit einer Leitung (60) verbindbar ist, durch welche in einer landwirtschaftlichen Maschine (10) gefördertes Material als Probe durch den Einlass (114) hindurch in die Messkammer (72) führbar ist,
**dadurch gekennzeichnet, dass** die Leitung (60) vom Einlass (114) der Messkammer (72) trennbar und anstelle der Leitung (60) eine Befülleinrichtung (110) zum Einfüllen einer Probe mit dem Einlass (114) koppelbar ist.

2. Sensorzusammenbau (64) nach Anspruch 1, wobei die Befülleinrichtung (110) manuell durch einen Bediener befüllbar ist.

3. Sensorzusammenbau (64) nach Anspruch 2, wobei die Befülleinrichtung (110) einen Trichter umfasst.

4. Sensorzusammenbau (64) nach einem der Ansprüche 1 bis 3, wobei die Messkammer (72) einen ersten Auslass (102) umfasst, durch welchen das durch die Leitung (60) zugeführte Material wieder der landwirtschaftlichen Maschine (10) zuführbar ist, und wobei die Messkammer (72) einen zweiten Auslass (100) umfasst, durch den eine mittels der Befülleinrichtung (110) der Messkammer (72) zugeführte Probe aus der Messkammer (72) herausführbar ist.

5. Sensorzusammenbau (64) nach Anspruch 4, wobei der zweite Auslass (100) mit einem Behälter (112) zur Aufnahme der aus der Messkammer (72) abgelassenen Probe verbindbar ist.

6. Sensorzusammenbau (64) nach Anspruch 4 oder 5, wobei der zweite Auslass (100) am Boden (98) der Messkammer (72) stromauf des ersten Auslasses (100) angeordnet und verschließbar ist.

7. Sensorzusammenbau (64) nach einem der Ansprüche 1 bis 6, wobei der Messkammer (72) ein Förderer (96) zugeordnet ist, der konfiguriert ist, die Probe am Sensor (66) entlang zu fördern.

8. Sensorzusammenbau (64) nach Anspruch 7, wobei der Förderer (96) stromab des Sensors (66) angeordnet ist.

9. Sensorzusammenbau (64) nach einem der vorhergehenden Ansprüche, wobei der Sensor (66) ein Nahinfrarotspektrometer ist.

10. Landwirtschaftliche Maschine (10), insbesondere Erntemaschine, mit einem Sensorzusammenbau (64) nach einem der vorhergehenden Ansprüche, umfassend Mittel zum Fördern von landwirtschaftlichem Material, wobei der Sensorzusammenbau (64) konfiguriert ist, durch die Leitung (60) in der Maschine (10) gefördertes Material zu erhalten und dem Sensor (66) als Probe zu präsentieren, damit er die Eigenschaft des Materials erfassen kann.

11. Verfahren zur Messung von Eigenschaften von Erntegut oder einer anderen Probe mittels eines Sensorzusammenbaus (64), der einen zur Erfassung wenigstens einer Eigenschaft einer Probe eingerichteten Sensor (66) und eine Messkammer (72) mit einem Einlass (114) für die Probe umfasst,
wobei in einer ersten Messbetriebsart der Einlass (114) mit einer Leitung (60) verbunden wird, durch welche in einer landwirtschaftlichen Maschine (10) gefördertes Material als Probe durch den Einlass (114) hindurch und in die Messkammer (72) geführt wird und der Sensor (66) mit der in der Messkammer (72) enthaltenen Probe zusammenwirkt und deren Eigenschaft ermittelt,
**dadurch gekennzeichnet, dass** in einer zweiten Messbetriebsart die Leitung (60) vom Einlass (114) der Messkammer (72) getrennt und anstelle der Leitung (60) eine Befülleinrichtung (110) zum Einfüllen einer Probe mit dem Einlass (114) gekoppelt wird.

## Geänderte Patentansprüche

### Geänderte Patentansprüche gemäss Regel 137(2) EPÜ.

1. Landwirtschaftliche Maschine (10) mit:
einem an der landwirtschaftlichen Maschine (10) angebrachten Sensorzusammenbau (64), der einen zur Erfassung wenigstens einer Eigenschaft einer Probe eingerichteten Sensor (66) und eine Messkammer (72) mit einem Einlass (114) umfasst, durch den die Probe in die Messkammer (72) einführbar ist, wobei der Sensor (66) eingerichtet ist, mit der in der Messkammer (72) enthaltenen Probe zusammenzuwirken und deren Eigenschaft zu ermitteln, und
einer trennbar mit dem Einlass (114) verbundenen Leitung (60), durch welche in der landwirtschaftlichen Maschine (10) gefördertes Material als Probe durch den Einlass (114) hindurch in die Messkammer (72) führbar ist,
**dadurch gekennzeichnet, dass** eine manuell durch einen Bediener befüllbare Befülleinrichtung (110) zum Einfüllen einer Probe vorgesehen ist, die anstelle der Leitung (60) mit dem Einlass (114) der Messkammer (72) des an der landwirtschaftlichen Maschine (10) angebrachten Sensorzusammenbaus (64) koppelbar ist,
und dass die Messkammer (72) einen ersten Auslass (102) umfasst, durch welchen das durch die Leitung (60) zugeführte Material wieder der landwirtschaftlichen Maschine (10) zuführbar ist, und die Messkammer (72) einen zweiten Auslass (100) umfasst, durch den eine mittels der Befülleinrichtung (110) der Messkammer (72) zugeführte Probe aus der Messkammer (72) herausführbar ist.

2. Landwirtschaftliche Maschine (10) nach Anspruch 1, wobei die Befülleinrichtung (110) einen Trichter umfasst.

3. Landwirtschaftliche Maschine (10) nach Anspruch 1 oder 2, wobei der zweite Auslass (100) mit einem Behälter (112) zur Aufnahme der aus der Messkammer (72) abgelassenen Probe verbindbar ist.

4. Landwirtschaftliche Maschine (10) nach einem der Ansprüche 1 bis 3, wobei der zweite Auslass (100) am Boden (98) der Messkammer (72) stromauf des ersten Auslasses (100) angeordnet und verschließbar ist.

5. Landwirtschaftliche Maschine (10) nach einem der Ansprüche 1 bis 4, wobei der Messkammer (72) ein Förderer (96) zugeordnet ist, der konfiguriert ist, die Probe am Sensor (66) entlang zu fördern.

6. Landwirtschaftliche Maschine (10) nach Anspruch 5, wobei der Förderer (96) stromab des Sensors (66) angeordnet ist.

7. Landwirtschaftliche Maschine (10) nach einem der vorhergehenden Ansprüche, wobei der Sensor (66) ein Nahinfrarotspektrometer ist.

8. Landwirtschaftliche Maschine (10) nach einem der vorhergehenden Ansprüche, die als Emtemaschine ausgeführt ist.
